# EUROPEAN PATENT APPLICATION

(11) **EP 3 190 739 A1**
(43) Date of publication of application: **12.07.2017**
(21) Application number: 15837803.4
(22) Date of filing: 01.09.2015
(51) Int. Cl.: H04L 5/00, H04L 1/18

(54) **METHOD AND DEVICE FOR TRANSMITTING AND RECEIVING WIRELESS SIGNAL IN WIRELESS COMMUNICATION SYSTEM**

(30) Priority: 01.09.2014 US 201462044336 P
(71) Applicant: LG Electronics Inc., Seoul 07336 (KR)
(72) Inventor: YANG, Suckchel, Seoul 06772 (KR); AHN, Joonkui, Seoul 06772 (KR); LEE, Seungmin, Seoul 06772 (KR)
(74) Representative: Frenkel, Matthias Alexander
(86) International application number: PCT/KR2015/009174
(87) International publication number: WO 2016/036100

(57) **Abstract**

The present invention relates to a wireless communication system and, more particularly, to a method and a device therefor, the method comprising the steps of: configuring an FDD PCell and a TDD SCell; configuring a first UL-DL SF pattern to the TDD SCell according to pattern indication information received through an L1 signal; and transmitting, through an SR PUCCH, HARQ-ACK information related to an SF in which the transmission direction of the TDD SCell is UL on the basis of the first UL-DL SF pattern, wherein the HARQ-ACK information includes HARQ-ACK responses for both the PCell and the SCell when the transmission direction of the TDD SCell is DL in the SF on the basis of a reference UL-DL SF pattern configured to the TDD SCell in relation to a HARQ-ACK feedback, and the HARQ-ACK information includes an HARQ-ACLK response for only the PCell when the transmission direction of the TDD SCell is UL in the SF on the basis of the reference UL-DL SF pattern.

## Description

### [Technical Field]

The present invention relates to a wireless communication system, and more particularly, to a method and apparatus for transmitting/receiving a wireless signal. The wireless communication system includes a CA-based (Carrier Aggregation-based) wireless communication system.

### [Background Art]

Wireless communication systems have been widely deployed to provide various types of communication services including voice and data services. In general, a wireless communication system is a multiple access system that supports communication among multiple users by sharing available system resources (e.g. bandwidth, transmit power, etc.) among the multiple users. The multiple access system may adopt a multiple access scheme such as code division multiple access (CDMA), frequency division multiple access (FDMA), time division multiple access (TDMA), orthogonal frequency division multiple access (OFDMA), or single carrier frequency division multiple access (SC-FDMA).

### [Disclosure]

### [Technical Problem]

An object of the present invention devised to solve the problem lies in a method of efficiently performing wireless signal transmission and reception processes and a device therefor. Another object of the present invention is to provide a method of efficiently transmitting uplink control information and a device therefor.

Technical tasks obtainable from the present invention are non-limited by the above-mentioned technical task. And, other unmentioned technical tasks can be clearly understood from the following description by those having ordinary skill in the technical field to which the present invention pertains.

### [Technical Solution]

In an aspect of the present invention, a method of transmitting HARQ-ACK (Hybrid Automatic Repeat request Acknowledgement) information by a user equipment (UE) in a wireless communication system includes: configuring an FDD (Frequency Division Duplex) PCell (Primary Cell) and a TDD (Time Division Duplex) SCell (Secondary Cell); configuring a first UL-DL SF (Uplink-Downlink subframe) pattern for the TDD SCell according to pattern indication information received through an L1 (Layer 1) signal; and transmitting, through an SR (Scheduling Request) PUCCH (Physical Uplink Control Channel), HARQ-ACK information related to an SF in which the transmission direction of the TDD SCell is UL on the basis of the first UL-DL SF pattern, wherein the HARQ-ACK information includes HARQ-ACK responses for both the PCell and the SCell when the transmission direction of the TDD SCell is DL in the SF on the basis of a reference UL-DL SF pattern configured for the TDD SCell in relation to a HARQ-ACK feedback, and the HARQ-ACK information includes an HARQ-ACLK response for only the PCell when the transmission direction of the TDD SCell is UL in the SF on the basis of the reference UL-DL SF pattern.

In another aspect of the present invention, a UE configured to transmit HARQ-ACK information in a wireless communication system includes: a radio frequency (RF) module; and a processor, wherein the processor is configured: to configure an FDD PCell and a TDD SCell; to configure a first UL-DL SF pattern for the TDD SCell according to pattern indication information received through an L1 signal; and to transmit, through an SR PUCCH, HARQ-ACK information related to an SF in which the transmission direction of the TDD SCell is UL on the basis of the first UL-DL SF pattern, wherein the HARQ-ACK information includes HARQ-ACK responses for both the PCell and the SCell when the transmission direction of the TDD SCell is DL in the SF on the basis of a reference UL-DL SF pattern configured for the TDD SCell in relation to a HARQ-ACK feedback, and the HARQ-ACK information includes an HARQ-ACLK response for only the PCell when the transmission direction of the TDD SCell is UL in the SF on the basis of the reference UL-DL SF pattern.

The HARQ-ACK responses for the PCell and the SCell may include HARQ-ACK responses bundled per cell when the HARQ-ACK information includes the HARQ-ACK responses for both the PCell and the SCell.

The HARQ-ACK information may include an individual HARQ-ACK response generated per transport block of the PCell for one or more transport blocks of the PCell when the HARQ-ACK information includes the HARQ-ACK response for only the PCell.

When the transmission direction of the TDD SCell is DL in the SF on the basis of the reference UL-DL SF pattern configured for the TDD SCell, the SF may indicate an SF in which the transmission direction is reconfigurable from UL to DL.

When the transmission direction of the TDD SCell is UL in the SF on the basis of the reference UL-DL SF pattern configured for the TDD SCell, the SF may indicate an SF in which the transmission direction is not reconfigurable from UL to DL.

The SR PUCCH may include PUCCH format 1a or PUCCH format 1b.

### [Advantageous Effects]

According to the present invention, it is possible to perform efficient wireless signal transmission and reception in a wireless communication system. Specifically, it is possible to efficiently transmit uplink control information.

Effects obtainable from the present invention are non-limited by the above mentioned effect. And, other unmentioned effects can be clearly understood from the following description by those having ordinary skill in the technical field to which the present invention pertains.

### [Description of Drawings]

The accompanying drawings, which are included to provide a further understanding of the invention and are incorporated in and constitute a part of this specification, illustrate embodiments of the invention and together with the description serve to explain the principles of the invention.
FIG. 1 illustrates physical channels used in 3GPP LTE(-A) and a signal transmission method using the same.
FIG.2 illustrates a radio frame structure.
FIG. 3 illustrates a resource grid of a downlink slot.
FIG. 4 illustrates a downlink subframe structure.
FIG. 5 illustrates an example of Enhanced Physical Downlink Control Channel (EPDCCH).
FIG. 6 illustrates the structure of an uplink subframe.

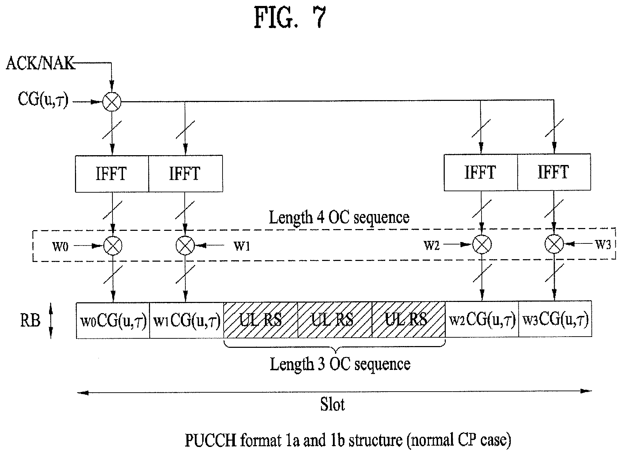

FIG. 7 illustrates a slot level structure of PUCCH (Physical Uplink Control Channel) formats 1a/ab.
FIG. 8 illustrates a carrier aggregation (CA)-based wireless communication system.
FIG. 9 illustrates a cross-carrier scheduling.
FIG. 10 illustrates FDD PCell-TDD SCell CA.
FIGS. 11 and 12 illustrate a HARQ-ACK transmission process in FDD PCell-TDD SCell CA.
FIG. 13 illustrates U=>D reconfiguration in an eIMTA TDD cell.
FIG. 14 illustrates a HARQ-ACK transmission process according to an embodiment of the present invention.
FIG. 15 illustrates a base station and a user equipment applicable to an embodiment of the present invention.

### [Best Mode]

Embodiments of the present invention are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is a part of Evolved UMTS (E-UMTS) using E-UTRA, employing OFDMA for downlink and SC-FDMA for uplink. LTE-Advanced (LTE-A) evolves from 3GPP LTE.

While the following description is given, centering on 3GPP LTE/LTE-A for clarity, this is purely exemplary and thus should not be construed as limiting the present invention. It should be noted that specific terms disclosed in the present invention are proposed for convenience of description and better understanding of the present invention, and the use of these specific terms may be changed to other formats within the technical scope or spirit of the present invention.

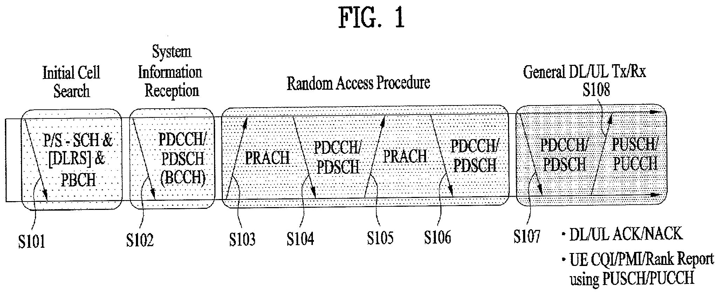

FIG. 1 illustrates physical channels used in 3GPP LTE(-A) and a signal transmission method using the same.

When powered on or when a UE initially enters a cell, the UE performs initial cell search involving synchronization with a BS in step S101. For initial cell search, the UE synchronizes with the BS and acquire information such as a cell Identifier (ID) by receiving a primary synchronization channel (P-SCH) and a secondary synchronization channel (S-SCH) from the BS. Then the UE may receive broadcast information from the cell on a physical broadcast channel (PBCH). In the mean time, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

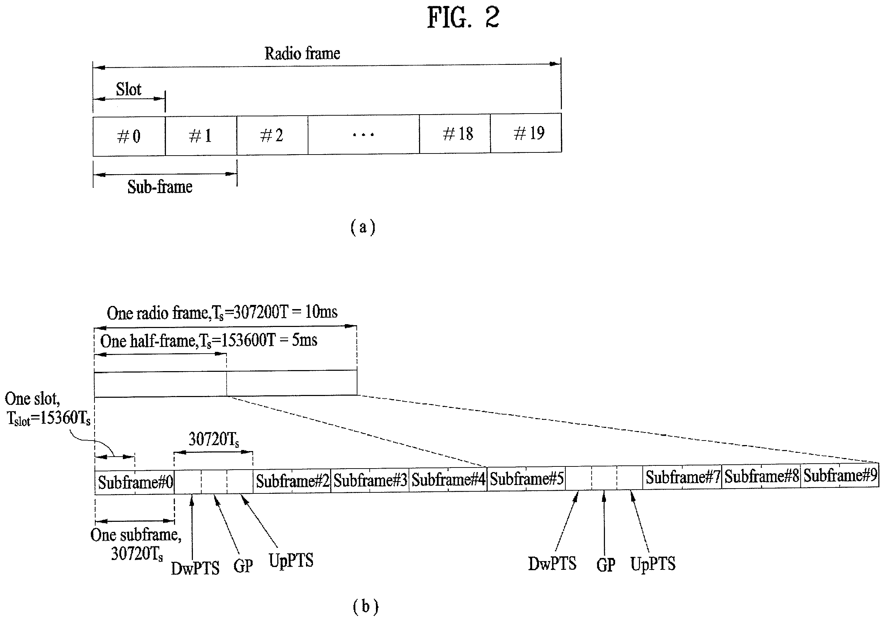

FIG. 2 illustrates a radio frame structure. Uplink/downlink data packet transmission is performed on a subframe-by-subframe basis. A subframe is defined as a predetermined time interval including a plurality of symbols. 3GPP LTE supports a type-1 radio frame structure applicable to frequency division duplex (FDD) and a type-2 radio frame structure applicable to time division duplex (TDD).

FIG. 2(a) illustrates a type-1 radio frame structure. A downlink subframe includes 10 subframes each of which includes 2 slots in the time domain. A time for transmitting a subframe is defined as a transmission time interval (TTI). For example, each subframe has a duration of 1ms and each slot has a duration of 0.5ms. A slot includes a plurality of OFDM symbols in the time domain and includes a plurality of resource blocks (RBs) in the frequency domain. Since downlink uses OFDM in 3GPP LTE, an OFDM symbol represents a symbol period. The OFDM symbol may be called an SC-FDMA symbol or symbol period. An RB as a resource allocation unit may include a plurality of consecutive subcarriers in one slot.

The number of OFDM symbols included in one slot may depend on cyclic prefix (CP) configuration. CPs include an extended CP and a normal CP. When an OFDM symbol is configured with the normal CP, for example, the number of OFDM symbols included in one slot may be 7. When an OFDM symbol is configured with the extended CP, the length of one OFDM symbol increases, and thus the number of OFDM symbols included in one slot is smaller than that in case of the normal CP. In case of the extended CP, the number of OFDM symbols allocated to one slot may be 6. When a channel state is unstable, such as a case in which a UE moves at a high speed, the extended CP can be used to reduce inter-symbol interference.

When the normal CP is used, one subframe includes 14 OFDM symbols since one slot has 7 OFDM symbols. The first three OFDM symbols at most in each subframe can be allocated to a PDCCH and the remaining OFDM symbols can be allocated to a PDSCH.

FIG. 2(b) illustrates a type-2 radio frame structure. The type-2 radio frame includes 2 half frames. Each half frame includes 4(5) normal subframes and 10 special subframes. The normal subframes are used for uplink or downlink according to UL-DL configuration. A subframe is composed of 2 slots.

Table 1 shows subframe configurations in a radio frame according to UL-DL configurations.

**[Table 1]**

| Uplink-downlink configuration | Downlink-to-Uplink Switch point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5ms | D | S | U | U | U | D | S | U | U | U |
| 1 | 5ms | D | S | U | U | D | D | S | U | U | D |
| 2 | 5ms | D | S | U | D | D | D | S | U | D | D |
| 3 | 10ms | D | S | U | U | U | D | D | D | D | D |
| 4 | 10ms | D | S | U | U | D | D | D | D | D | D |
| 5 | 10ms | D | S | U | D | D | D | D | D | D | D |
| 6 | 5ms | D | S | U | U | U | D | S | U | U | D |

In Table 1, D denotes a downlink subframe, U denotes an uplink subframe and S denotes a special subframe. The special subframe includes DwPTS (Downlink Pilot TimeSlot), GP (Guard Period), and UpPTS (Uplink Pilot TimeSlot). DwPTS is used for initial cell search, synchronization or channel estimation in a UE and UpPTS is used for channel estimation in a BS and uplink transmission synchronization in a UE. The GP eliminates UL interference caused by multi-path delay of a DL signal between a UL and a DL.

The radio frame structure is merely exemplary and the number of subframes included in the radio frame, the number of slots included in a subframe, and the number of symbols included in a slot can be vary.

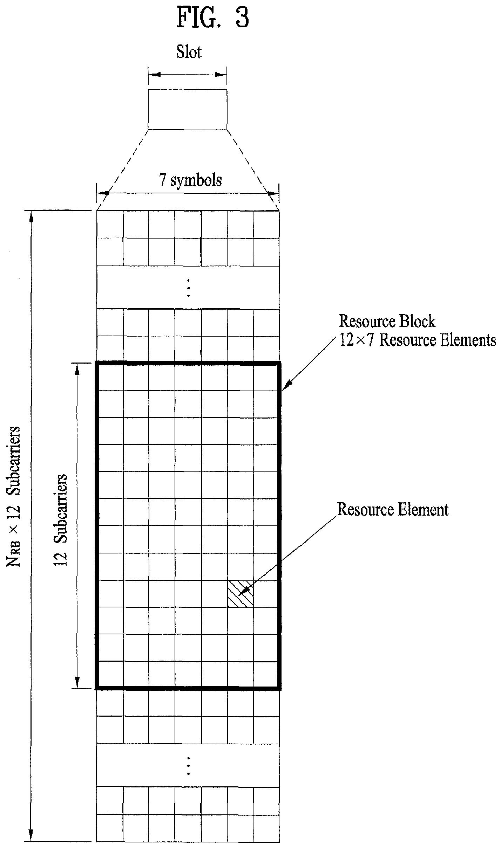

FIG. 3 illustrates a resource grid of a downlink slot.

Referring to FIG. 3, a downlink slot includes a plurality of OFDM symbols in the time domain. While one downlink slot may include 7 OFDM symbols and one resource block (RB) may include 12 subcarriers in the frequency domain in the figure, the present invention is not limited thereto. Each element on the resource grid is referred to as a resource element (RE). One RB includes 12×7 REs. The number NRB of RBs included in the downlink slot depends on a downlink transmit bandwidth. The structure of an uplink slot may be same as that of the downlink slot.

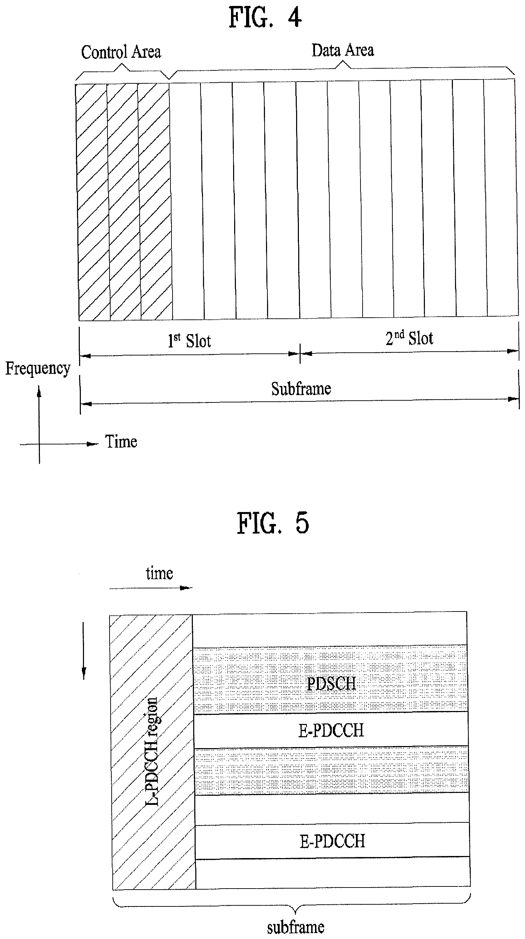

FIG. 4 illustrates a downlink subframe structure.

Referring to FIG. 4, a maximum of three (four) OFDM symbols located in a front portion of a first slot within a subframe correspond to a control region to which a control channel is allocated. The remaining OFDM symbols correspond to a data region to which a physical downlink shared chancel (PDSCH) is allocated. A basic resource unit of the data region is an RB. Examples of downlink control channels used in LTE include a physical control format indicator channel (PCFICH), a physical downlink control channel (PDCCH), a physical hybrid ARQ indicator channel (PHICH), etc. The PCFICH is transmitted at a first OFDM symbol of a subframe and carries information regarding the number of OFDM symbols used for transmission of control channels within the subframe. The PHICH is a response of uplink transmission and carries an HARQ acknowledgment (ACK)/negative-acknowledgment (NACK) signal. Control information transmitted through the PDCCH is referred to as downlink control information (DCI). The DCI includes uplink or downlink scheduling information or an uplink transmit power control command for an arbitrary UE group.

Control information transmitted through the PDCCH is referred to as downlink control information (DCI). Formats 0, 3, 3A and 4 for uplink and formats 1, 1A, 1B, 1C, 1D, 2, 2A, 2B and 2C for downlink are defined as DCI formats. Information field type, the number of information fields, the number of bits of each information field, etc. depend on DIC format. For example, the DCI formats selectively include information such as hopping flag, RB assignment, MCS (Modulation Coding Scheme), RV (Redundancy Version), NDI (New Data Indicator), TPC (Transmit Power Control), HARQ process number, PMI (Precoding Matrix Indicator) confirmation as necessary. Accordingly, the size of control information matched to a DCI format depends on the DCI format. A arbitrary DCI format may be used to transmit two or more types of control information. For example, DIC formats 0/1A is used to carry DCI format 0 or DIC format 1, which are discriminated from each other using a flag field.

A PDCCH may carry a transport format and a resource allocation of a downlink shared channel (DL-SCH), resource allocation information of an uplink shared channel (UL-SCH), paging information on a paging channel (PCH), system information on the DL-SCH, information on resource allocation of an upper-layer control message such as a random access response transmitted on the PDSCH, a set of Tx power control commands on individual UEs within an arbitrary UE group, a Tx power control command, information on activation of a voice over IP (VoIP), etc. A plurality of PDCCHs can be transmitted within a control region. The UE can monitor the plurality of PDCCHs. The PDCCH is transmitted on an aggregation of one or several consecutive control channel elements (CCEs). The CCE is a logical allocation unit used to provide the PDCCH with a coding rate based on a state of a radio channel. The CCE corresponds to a plurality of resource element groups (REGs). A format of the PDCCH and the number of bits of the available PDCCH are determined by the number of CCEs. The BS determines a PDCCH format according to DCI to be transmitted to the UE, and attaches a cyclic redundancy check (CRC) to control information. The CRC is masked with a unique identifier (referred to as a radio network temporary identifier (RNTI)) according to an owner or usage of the PDCCH. If the PDCCH is for a specific UE, a unique identifier (e.g., cell-RNTI (C-RNTI)) of the UE may be masked to the CRC. Alternatively, if the PDCCH is for a paging message, a paging identifier (e.g., paging-RNTI (P-RNTI)) may be masked to the CRC. If the PDCCH is for system information (more specifically, a system information block (SIB)), a system information RNTI (SI-RNTI) may be masked to the CRC. When the PDCCH is for a random access response, a random access-RNTI (RA-RNTI) may be masked to the CRC.

The PDCCH carries a message known as DCI which includes resource assignment information and other control information for a UE or UE group. In general, a plurality of PDCCHs can be transmitted in a subframe. Each PDCCH is transmitted using one or more CCEs. Each CCE corresponds to 9 sets of 4 REs. The 4 REs are referred to as an REG. 4 QPSK symbols are mapped to one REG. REs allocated to a reference signal are not included in an REG, and thus the total number of REGs in OFDM symbols depends on presence or absence of a cell-specific reference signal. The concept of REG (i.e. group based mapping, each group including 4 REs) is used for other downlink control channels (PCFICH and PHICH). That is, REG is used as a basic resource unit of a control region. 4 PDCCH formats are supported as shown in Table 2.

**[Table 2]**

| PDCCH format | Number of CCEs (n) | Number of REGs | Number of PDCCH bits |
|---|---|---|---|
| 0 | 1 | 9 | 72 |
| 1 | 2 | 8 | 144 |
| 2 | 4 | 36 | 288 |
| 3 | 5 | 72 | 576 |

CCEs are sequentially numbered. To simplify a decoding process, transmission of a PDCCH having a format including n CCEs can be started using as many CCEs as a multiple of n. The number of CCEs used to transmit a specific PDCCH is determined by a BS according to channel condition. For example, if a PDCCH is for a UE having a high-quality downlink channel (e.g. a channel close to the BS), only one CCE can be used for PDCCH transmission. However, for a UE having a poor channel (e.g. a channel close to a cell edge), 8 CCEs can be used for PDCCH transmission in order to obtain sufficient robustness. In addition, a power level of the PDCCH can be controlled according to channel condition.

LTE defines CCE positions in a limited set in which PDCCHs can be positioned for each UE. CCE positions in a limited set that the UE needs to monitor in order to detect the PDCCH allocated thereto may be referred to as a search space (SS). In LTE, the SS has a size depending on PDCCH format. A UE-specific search space (USS) and a common search space (CSS) are separately defined. The USS is set per UE and the range of the CSS is signaled to all UEs. The USS and the CSS may overlap for a given UE. In the case of a considerably small SS with respect to a specific UE, when some CCEs positions are allocated in the SS, remaining CCEs are not present. Accordingly, the BS may not find CCE resources on which PDCCHs will be transmitted to available UEs within given subframes. To minimize the possibility that this blocking continues to the next subframe, a UE-specific hopping sequence is applied to the starting point of the USS.

Table 3 shows sizes of the CSS and USS.

**[Table 3]**

| PDCCH format | Number of CCEs (n) | Number of candidates in common search space | Number of candidates in dedicated search space |
|---|---|---|---|
| 0 | 1 | - | 6 |
| 1 | 2 | - | 6 |
| 2 | 4 | 4 | 2 |
| 3 | 8 | 2 | 2 |

To control computational load of blind decoding based on the number of blind decoding processes to an appropriate level, the UE is not required to simultaneously search for all defined DCI formats. In general, the UE searches for formats 0 and 1A at all times in the USS. Formats 0 and 1A have the same size and are discriminated from each other by a flag in a message. The UE may need to receive an additional format (e.g. format 1, 1B or 2 according to PDSCH transmission mode set by a BS). The UE searches for formats 1A and 1C in the CSS. Furthermore, the UE may be set to search for format 3 or 3A. Formats 3 and 3A have the same size as that of formats 0 and 1A and may be discriminated from each other by scrambling CRC with different (common) identifiers rather than a UE-specific identifier. PDSCH transmission schemes and information content of DCI formats according to transmission mode (TM) are arranged below.

### Transmission mode (TM)

- Transmission mode 1: Transmission from a single base station antenna port
- Transmission mode 2: Transmit diversity
- Transmission mode 3: Open-loop spatial multiplexing
- Transmission mode 4: Closed-loop spatial multiplexing
- Transmission mode 5: Multi-user MIMO (Multiple Input Multiple Output)
- Transmission mode 6: Closed-loop rank-1 precoding
- Transmission mode 7: Single-antenna port (port5) transmission
- Transmission mode 8: Double layer transmission (ports 7 and 8) or single-antenna port (port 7 or 8) transmission
- Transmission mode 9: Transmission through up to 8 layers (ports 7 to 14) or single-antenna port (port 7 or 8) transmission

### DCI format

- Format 0: Resource grants for PUSCH transmission
- Format 1: Resource assignments for single codeword PDSCH transmission (transmission modes 1, 2 and 7)
- Format 1A: Compact signaling of resource assignments for single codeword PDSCH (all modes)
- Format 1B: Compact resource assignments for PDSCH using rank-1 closed loop precoding (mod 6)
- Format 1C: Very compact resource assignments for PDSCH (e.g. paging/broadcast system information)
- Format 1D: Compact resource assignments for PDSCH using multi-user MIMO (mode 5)
- Format 2: Resource assignments for PDSCH for closed-loop MIMO operation (mode 4)
- Format 2A: Resource assignments for PDSCH for open-loop MIMO operation (mode 3)
- Format 3/3A: Power control commands for PUCCH and PUSCH with 2-bit/1-bit power adjustments

FIG. 5 illustrates an EPDCCH. The EPDCCH is a channel additionally introduced in LTE-A.

Referring to FIG. 5, a PDCCH (for convenience, legacy PDCCH or L-PDCCH) according to legacy LTE may be allocated to a control region (see FIG. 4) of a subframe. In the figure, the L-PDCCH region means a region to which a legacy PDCCH may be allocated. Meanwhile, a PDCCH may be further allocated to the data region (e.g., a resource region for a PDSCH). A PDCCH allocated to the data region is referred to as an E-PDCCH. As shown, control channel resources may be further acquired via the E-PDCCH to mitigate a scheduling restriction due to restricted control channel resources of the L-PDCCH region. Similarly to the L-PDCCH, the E-PDCCH carries DCI. For example, the E-PDCCH may carry downlink scheduling information and uplink scheduling information. For example, the UE may receive the E-PDCCH and receive data/control information via a PDSCH corresponding to the E-PDCCH. In addition, the UE may receive the E-PDCCH and transmit data/control information via a PUSCH corresponding to the E-PDCCH. The E-PDCCH/PDSCH may be allocated starting from a first OFDM symbol of the subframe, according to cell type. In this specification, the PDCCH includes both L-PDCCH and EPDCCH unless otherwise noted.

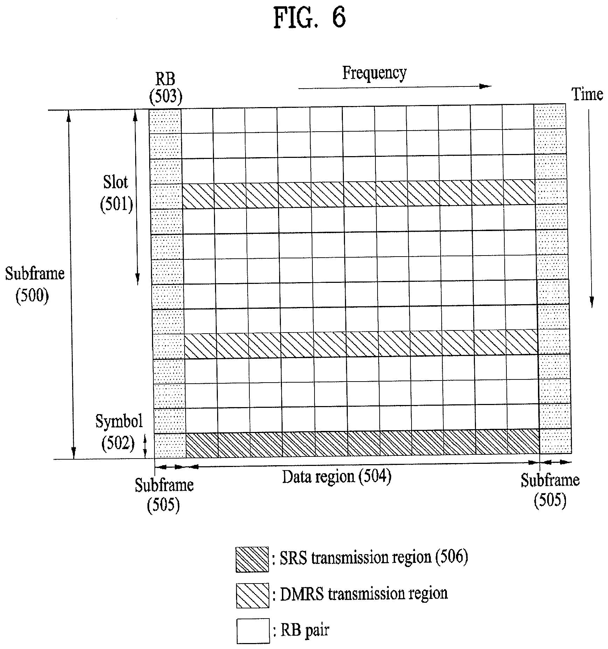

FIG. 6 illustrates a structure of an uplink subframe used in LTE(-A).

Referring to FIG. 6, a subframe 500 includes two 0.5ms slots 501. When the length of a normal cyclic prefix (CP) is assumed, each slot includes 7 symbols 502 and one symbol corresponds to one SC-FDMA symbol. A resource block (RB) 503 is a resource allocation unit corresponding to 12 subcarriers in the frequency domain and corresponding to one slot in the time domain. The uplink subframe structure of LTE(-A) is divided into a data region 504 and a control region 505. The data region refers to communication resources used to transmit data such as audio and packets to UEs and includes a PUSCH (Physical Uplink Shared Channel). The control region refers to communication resources used to transmit uplink control signal, e.g., a downlink channel quality report from each UE, ACK/NACK with respect to reception of a downlink signal, an uplink scheduling request and the like and includes a PUCCH (Physical Uplink Control Channel). A sounding reference signal (SRS) is transmitted through the last SC-FDMA symbol in the time domain in one subframe. SRSs of multiple UEs, which are transmitted through the last SC-FDMA of the same subframe, can be discriminated according to frequency positions/sequences.

The PUCCH can be used to transmit the following control information.
- SR (scheduling request): This is information used to request UL-SCH resources and is transmitted using on-off keying (OOK) scheme.
- HARQ-ACK: This is a response signal to a downlink signal (e.g., PDSCH, SPS release PDCCH). For example, 1-bit ACK/NACK is transmitted as a response to one DL codeword and 2-bit ACK/NACK is transmitted as a response to two DL codewords.
- CSI (Channel Status Information): This is feedback information on a DL channel and includes channel quality information (CQI), rank indicator (RI), precoding matrix indicator (PMI), precoding type indicator (PTI), etc. Here, the CSI refers to periodic CSI (p-CSI). Aperiodic CSI (aperiodic CSI (a-CSI)) transmitted at the request of an eNB is transmitted on a PUSCH.

Table 4 shows the mapping relationship between a PUCCH format (PF) and UCI in LTE(-A).

**[Table 4]**

| PUCCH format | Uplink Control Information (UCI) |
|---|---|
| Format 1 | SR (scheduling request) (unmodulated waveform) |
| Format 1a | 1-bit HARQ-ACK/NACK (with/without SR) |
| Format 1b | 2-bit HARQ-ACK/NACK (with/without SR) |
| Format 2 | CSI (20 coded bits) |
| Format 2 | CSI and 1-bit or 2-bit HARQ-ACK/NACK (20 bits) (for extended CP only) |
| Format 2a | CSI and 1-bit HARQ-ACK/NACK (20+1 coded bits) |
| Format 2b | CSI and 2-bit HARQ-ACK/NACK (20+2 coded bits) |
| Format 3 (LTE-A) | Up to 24 bits of HARQ-ACK/NACK + SR |

FIG.78 illustrates the structures of PUCCH formats 1a and 1b in a slot level. In PUCCH formats 1a and 1b, the same control information is repeated on a slot basis in a subframe. Each UE transmits an ACK/NACK signal in different resources configured by a different cyclic shift (CS) (frequency-domain code) and a different orthogonal cover code (OCC) (time-domain spreading code) of a computer-generated constant amplitude zero auto correlation (CG-CAZAC) sequence. An OCC includes a Walsh/DFT orthogonal code. If the number of CSs is 6 and the number of OCs is 3, ACK/NACK signals of 18 UEs may be multiplexed into the same physical resource block (PRB). In PUCCH format 1, ACK/NACK in PUCCH format 1a/1 is replaced by an SR.

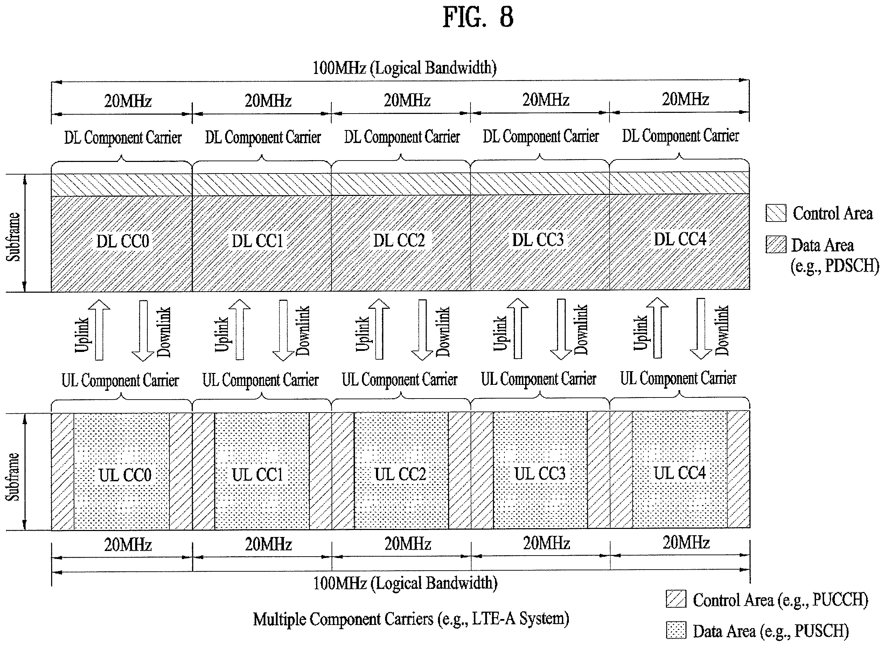

FIG. 8 illustrates carrier aggregation (CA) communication system.

Referring to FIG. 8, a plurality of UL/DL component carriers (CCs) can be aggregated to support a wider UL/DL bandwidth. The CCs may be contiguous or non-contiguous in the frequency domain. Bandwidths of the CCs can be independently determined. Asymmetrical CA in which the number of UL CCs is different from the number of DL CCs can be implemented. Control information may be transmitted/received only through a specific CC. This specific CC may be referred to as a primary CC and other CCs may be referred to as secondary CCs. For example, when cross-carrier scheduling (or cross-CC scheduling) is applied, a PDCCH for downlink allocation can be transmitted on DL CC #0 and a PDSCH corresponding thereto can be transmitted on DL CC #2. The term "component carrier" may be replaced by other equivalent terms (e.g. "carrier", "cell", etc.).

For cross-CC scheduling, a carrier indicator field (CIF) is used. Presence or absence of the CIF in a PDCCH can be determined by higher layer signaling (e.g. RRC signaling) semi-statically and UE-specifically (or UE group-specifically). The baseline of PDCCH transmission is summarized as follows.
■ CIF disabled: a PDCCH on a DL CC is used to allocate a PDSCH resource on the same DL CC or a PUSCH resource on a linked UL CC.
   - No CIF
■ CIF enabled: a PDCCH on a DL CC can be used to allocate a PDSCH or PUSCH resource on a specific DL/UL CC from among a plurality of aggregated DL/UL CCs using the CIF.
   - LTE DCI format extended to have CIF
      - CIF corresponds to a fixed x-bit field (e.g. x=3) (when CIF is set)
      - CIF position is fixed irrespective of DIC format size (when CIF is set)

When the CIF is present, the BS may allocate a monitoring DL CC (set) to reduce BD complexity of the UE. For PDSCH/PUSCH scheduling, the UE may detect/decode a PDCCH only on the corresponding DL CCs. The BS may transmit the PDCCH only through the monitoring DL CC (set). The monitoring DL CC set may be set UE-specifically, UE-group-specifically or cell-specifically.

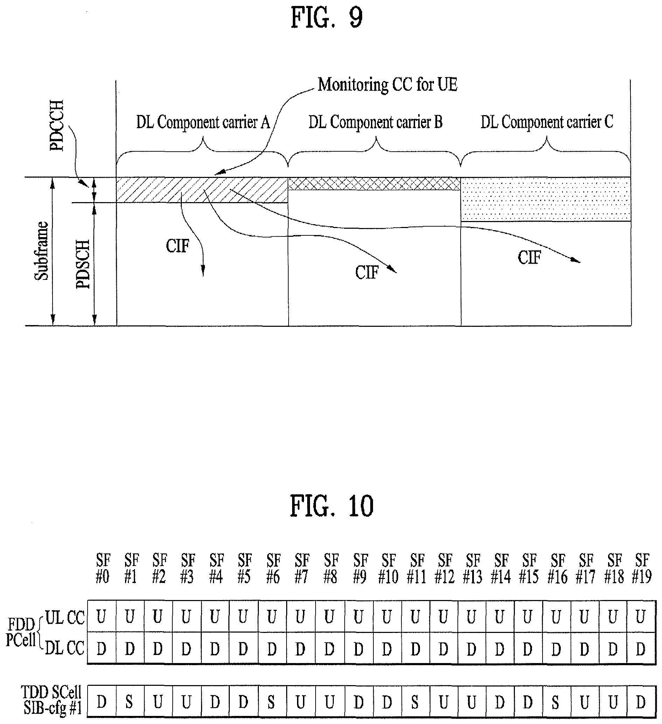

FIG. 9 illustrates scheduling when a plurality of carriers is aggregated. It is assumed that 3 DL CCs are aggregated and DL CC A is set to a PDCCH CC. DL CC A∼C may be referred to as a serving CC, serving carrier, serving cell, etc. When the CIF is disabled, each DL CC can transmit only a PDCCH that schedules a PDSCH corresponding to the DL CC without a CIF according to LTE PDCCH rule (non-cross-CC scheduling). When the CIF is enabled through UE-specific (or UE-group-specific or cell-specific) higher layer signaling, a specific CC (e.g. DL CC A) can transmit not only the PDCCH that schedules the PDSCH of DL CC A but also PDCCHs that schedule PDSCHs of other DL CCs using the CIF (cross-scheduling). A PDCCH is not transmitted on DL CC B and DL CC C.

### Embodiment: HARQ-ACK feedback for FDD-eIMTA TDD CA

Systems following LTE consider a scheme for setting/supporting CA of an FDD cell and a TDD cell (i.e., FDD-TDD CA) for a UE for more flexible frequency resource operation/utilization. FIG. 10 illustrates a case in which an FDD PCell and a TDD SCell are aggregated. As illustrated in FIG. 10, when the PCell operates on the basis of FDD, FDD DL HARQ timing can be applied to the TDD SCell as well as the FDD PCell in consideration of HARQ-ACK PUCCH transmission performed only through the FDD PCell. Here, DL HARQ timing includes a time (e.g., SF interval) between a time (e.g., SF) at which a downlink signal (e.g., a PDSCH or a PDCCH indicating SPS (Semi-Persistent Scheduling) release) that requires HARQ-ACK feedback is received and a time (e.g., SF) at which HARQ-ACK information for the downlink signal is transmitted (i.e., PDSCH-to-HARQ-ACK timing). For example, the FDD DL HARQ timing includes transmission of a HARQ-ACK feedback for a PDSCH, received in SF #n, in SF #(n+4).

When PUCCH format lb with channel selection (referred to hereinafter as CHsel) is set for HARQ-ACK feedback in an FDD PCell-TDD SCell CA situation, CHsel mapping used in CA of FDD cells (i.e., FDD-FDD CA) can be employed because the FDD DL HARQ timing is applied to both the PCell and SCell. Here, CHsel mapping includes mapping a HARQ-ACK state to a PUCCH resource (i.e., HARQ-ACK state-to-PUCCH resource mapping).

Table 5 shows transport block/serving cell-to-HARQ-ACK(j) mapping for FDD-FDD CA CHsel. Existing FDD-FDD CA CHsel supports CA of two cells, and applied CHsel mapping depends on the number of transport locks supported by each cell.

**[Table 5]**

| **A** | ***HARQ-ACK(j)*** | | | |
|---|---|---|---|---|
| | HARQ-ACK(0) | HARQ-ACK(1) | HARQ-ACK(2) | HARQ-ACK(3) |
| 2 | TB1 Primary cell | TB1 Secondary cell | NA | NA |
| 3 | TB1 Serving cell1 | TB2 Serving cell1 | TB1 Serving cell2 | NA |
| 4 | TB1 Primary cell | TB2 Primary cell | TB1 Secondary cell | TB2 Secondary cell |

| | | | | |
|---|---|---|---|---|
| * TB: Transport Block. NA: Not-available. | | | | |

Tables 6 to 8 are CHsel mapping tables depending on A.

**[Table 6]**

| HARQ-ACK(0) | HARQ-ACK(1) | n⁽¹⁾_{PUCCH} | b(0)b(1) |
|---|---|---|---|
| ACK | ACK | n⁽¹⁾_{PUCCH,1} | 1,1 |
| ACK | NACK/DTX | n⁽¹⁾_{PUCCH,0} | 1,1 |
| NACK/DTX | ACK | n⁽¹⁾_{PUCCH,1} | 0,0 |
| NACK | NACK/DTX | n⁽¹⁾_{PUCCH,0} | 0,0 |
| DTX | NACK/DTX | No transmission | |

**[Table 7]**

| HACK-ACK(0) | HARQ-ACK(1) | HARQ-ACK(2) | n⁽¹⁾_{PUCCH} | b(0)b(1) |
|---|---|---|---|---|
| ACK | ACK | ACK | n⁽¹⁾_{PUCCH,1} | 1,1 |
| ACK | NACK/DTX | ACK | n⁽¹⁾_{PUCCH,1} | 1,0 |
| NACK/DTX | ACK | ACK | n⁽¹⁾_{PUCCH,1} | 0,1 |
| NACK/DTX | NACK/DTX | ACK | n⁽¹⁾_{PUCCH,2} | 1,1 |
| ACK | ACK | NACK/DTX | n⁽¹⁾_{PUCCH,0} | 1,1 |
| ACK | NACK/DTX | NACK/DTX | n⁽¹⁾_{PUCCH,0} | 1,0 |
| NACK/DTX | ACK | NACK/DTX | n⁽¹⁾_{PUCCH,0} | 0,1 |
| NACK/DTX | NACK/DTX | NACK | n⁽¹⁾_{PUCCH,2} | 0,0 |
| NACK | NACK/DTX | DTX | n⁽¹⁾_{PUCCH,0} | 0,0 |
| NACK/DTX | NACK | DTX | n⁽¹⁾_{PUCCH,0} | 0,0 |
| DTX | DTX | DTX | No transmission | |

**[Table 8]**

| HARQ-ACK(0) | HARQ-ACK(1) | HARQ-ACK(2) | HARQ-ACK(0) | n⁽¹⁾_{PUCCH} | b(0)b(1) |
|---|---|---|---|---|---|
| ACK | ACK | ACK | ACK | n⁽¹⁾_{PUCCH,1} | 1,1 |
| ACK | NACK/DTX | ACK | ACK | n⁽¹⁾_{PUCCH,2} | 0,1 |
| NACK/DTX | ACK | ACK | ACK | n⁽¹⁾_{PUCCH,1} | 0,1 |
| NACK/DTX | NACK/DTX | ACK | ACK | n⁽¹⁾_{PUCCH,3} | 1,1 |
| ACK | ACK | ACK | NACK/DTX | n⁽¹⁾_{PUCCH,1} | 1,0 |
| ACK | NACK/DTX | ACK | NACK/DTX | n⁽¹⁾_{PUCCH,2} | 0,0 |
| NACK/DTX | ACK | ACK | NACK/DTX | n⁽¹⁾_{PUCCH,1} | 0,0 |
| NACK/DTX | NACK/DTX | ACK | NACK/DTX | n⁽¹⁾_{PUCCH,3} | 1,0 |
| ACK | ACK | NACK/DTX | ACK | n⁽¹⁾_{PUCCH,2} | 1,1 |
| ACK | NACK/DTX | NACK/DTX | ACK | n⁽¹⁾_{PUCCH,2} | 1,0 |
| NACK/DTX | ACK | NACK/DTX | ACK | n⁽¹⁾_{PUCCH,3} | 0,1 |
| NACK/DTX | NACK/DTX | NACK/DTX | ACK | n⁽¹⁾_{PUCCH,3} | 0,0 |
| ACK | ACK | NACK/DTX | NACK/DTX | n⁽¹⁾_{PUCCH,0} | 1,1 |
| ACK | NACK/DTX | NACK/DTX | NACK/DTX | n⁽¹⁾_{PUCCH,0} | 1,0 |
| NACK/DTX | ACK | NACK/DTX | NACK/DTX | n⁽¹⁾_{PUCCH,0} | 0,1 |
| NACK/DTX | NACK | NACK/DTX | NACK/DTX | n⁽¹⁾_{PUCCH,0} | 0,0 |
| NACK | NACK/DTX | NACK/DTX | NACK/DTX | n⁽¹⁾_{PUCCH,0} | 0,0 |
| DTX | DTX | NACK/DTX | NACK/DTX | No transmission | |

When FDD-FDD CA CHsel is set, a UE transmits a bit value b(0)b(1) using a PUCCH resource n⁽¹⁾_{PUCCH} selected from A PUCCH resources (n⁽¹⁾_{PUCCH,j}) according to Tables 6 to 8 (0≤j≤A-1)(A ⊂ {2,3,4}). The UE determines the A PUCCH resources (n⁽¹⁾_{PUCCH,j}) related to HARQ-ACK(j)(0≤j≤A-1) as follows.
- When a PDCCH indicating a PDSCH is detected in a PCell or a PDCCH indicating SRS release is detected, the PUCCH resource n⁽¹⁾_{PUCCH,j} is given as n⁽¹⁾_{PUCCH,j} = n_{CCE} + N⁽¹⁾_{PUCCH}. When the PCell is configured in a transmission mode in which up to 2 transport blocks are supported, the PUCCH resource n⁽¹⁾_{PUCCH,j+1} is given as n⁽¹⁾_{PUCCH,j+1} = n_{CCE} + 1 + N⁽¹⁾_{PUCCH}. Here, n_{CCE} indicates the smallest CCE index of CCEs used for PDCCH transmission and N⁽¹⁾_{PUCCH} is a constant set by a higher layer (e.g., radio resource control (RRC)).
- When a PDSCH is detected without a PDCCH corresponding thereto in a PCell (i.e., SPS PDSCH), the PUCCH resource n⁽¹⁾_{PUCCH,j} is set by a higher layer (e.g., RRC). When the PCell is configured in a transmission mode in which up to 2 transport blocks are supported, the PUCCH resource n⁽¹⁾_{PUCCH,j+1} is given as n⁽¹⁾_{PUCCH,j} = n⁽¹⁾_{PUCCH,j+1} + 1. Specifically, an eNB informs a UE of a PUCCH resource candidate set through an RRC message and indicates one PUCCH resource in the PUCCH resource candidate set through a TPC field of an SPS activation PDCCH.
- When a PDCCH indicating a PDSCH is detected in an SCell, the PUCCH resource n⁽¹⁾_{PUCCH,j} is set by a higher layer (e.g., RRC). When the SCell is configured in a transmission mode in which up to 2 transport blocks are supported, the PUCCH resource n⁽¹⁾_{PUCCH,j+1} is set by a higher layer (e.g., RRC). Specifically, the eNB informs the UE of a PUCCH resource candidate set through an RRC message and indicates one PUCCH resource or one pair of PUCCH resources in the PUCCH resource candidate set through a TPC field of the PDCCH.

Meanwhile, when FDD PCell-TDD SCell CA is set and CHsel is set for HARQ-ACK feedback, a situation in which only DL of the FDD PCell is temporarily present in an SF in which the TDD SCell is set to UL in terms of HARQ-ACK feedback occurs. For this SF (i.e., SF corresponding to UL in a TDD cell), a HARQ-ACK transmission scheme (i.e., HARQ-ACK transmission scheme using PUCCH formats la/lb) applied to a single FDD cell may be exceptionally applied instead of CHsel (referred to hereinafter as PF1-fallback). Since HARQ-ACK timing of a TDD SCell conforms to an FDD cell, SFs of the TDD SCell can be handled as D in terms of HARQ-ACK feedback. Accordingly, PF1-fallback can be applied on the basis of a TDD SCell SF configuration in terms of HARQ-ACK feedback. However, this is inefficient because CHsel is also applied to SFs in which downlink signals cannot be received. Therefore, PF1-fallback is applied on the basis of an actual UL-DL configuration (i.e., SIB-cfg) of the TDD SCell instead of the SF configuration in terms of HARQ-ACK feedback. The actual UL-DL configuration of the TDD SCell is determined on the basis of a UL-DL configuration (referred to hereinafter as SIB-cfg) set through a SIB (System Information Block) or an RRC message.

In the existing HARQ-ACK transmission scheme using the PUCCH formats 1a/1b, 1-bit [b(0)] and 2-bit [b(0)b(1)] ACK/NACK information is modulated according to BPSK (Binary Phase Shift Keying) and QPSK (Quadrature Phase Shift Keying), respectively, and one ACK/NACK modulated symbol is generated (d₀). Each bit [b(i), i=0,1] in ACK/NACK information indicates a HARQ response to a corresponding DL transport block, and a corresponding bit is 1 in the case of positive ACK and 0 in the case of negative ACK(NACK). Table 9 is a modulation table defined for the PUCCH formats 1a and 1b in LTE.

**[Table 9]**

| PUCCH format | b(0),...,b(M_{bit}-1) | d(0) |
|---|---|---|
| 1a | 0 | 1 |
| | 1 | -1 |
| 1b | 00 | 1 |
| | 01 | -j |
| | 10 | j |
| | 11 | -1 |

PF1-fallback may be particularly efficient when TxD (Transmit Diversity) is set in CHsel based HARQ-ACK PUCCH transmission. Currently, (additional) PUCCH resources for TxD based HARQ-ACK transmission in single cell FDD are implicitly allocated from DL grant PDCCH transmission resources, whereas (additional) PUCCH resources for TxD based transmission in CA for which CHsel is set are explicitly allocated through RRC signaling. Specifically, a PUCCH resource n^{(1)(p=0)}_{PUCCH} for antenna port 0 is given as n^{(1)(p=0)}_{PUCCH} = n_{CCE} + N⁽¹⁾_{PUCCH} and a PUCCH resource n^{(1)(p=1)}_{PUCCH} for antenna port 1 is given as n^{(1)(p=1)}_{PUCCH} = n_{CCE} + 1 + N⁽¹⁾_{PUCCH} during PF1-fallback. When CHsel is applied, the PUCCH resource n^{(1)(p=0)}_{PUCCH,j} for antenna port 0 is given by the scheme described with reference to Tables 5 to 8 and the PUCCH resource n^{(1)(p=1)}_{PUCCH,j} for antenna port 1 is additionally given by a higher layer (e.g., RRC). Accordingly, PUCCH resources can be efficiently used from the viewpoint of all cells when PF1-fallback is applied.

When PF1-fallback is applied to SFs in which a TDD SCell is set to UL in the same situation, FDD CHsel based HARQ-ACK and a (positive) SR can be simultaneously transmitted. Specifically, when HARQ-ACK and a (positive) SR are simultaneously transmitted in a single cell FDD situation, a HARQ-ACK state is mapped to a PUCCH resource allocated for the SR (referred to hereinafter as an SR PUCCH resource) without additional signal processing and transmitted because a positive/negative SR is determined only by whether a signal is transmitted on the SR PUCCH resource or not (i.e., on-off keying (OOK)). When HARQ-ACK and a (positive) SR are simultaneously transmitted in an FDD CA situation in which CHsel is set, spatial bundling is applied per cell and then two bundled HARQ-ACK states are mapped to the SR PUCCH resource and transmitted. This is because the SR PUCCH has the same structure as the PUCCH formats la/lb and thus can carry up to 2 bits. Here, spatial bundling per cell includes a method of performing a logical AND operation on all HARQ-ACK responses for TBs/CWs in a cell to generate one (e.g., 1-bit) bundled HARQ-ACK response. Accordingly, more effective DL throughput performance can be secured/ensured from the viewpoint of UEs when the PF1-fallback is applied.

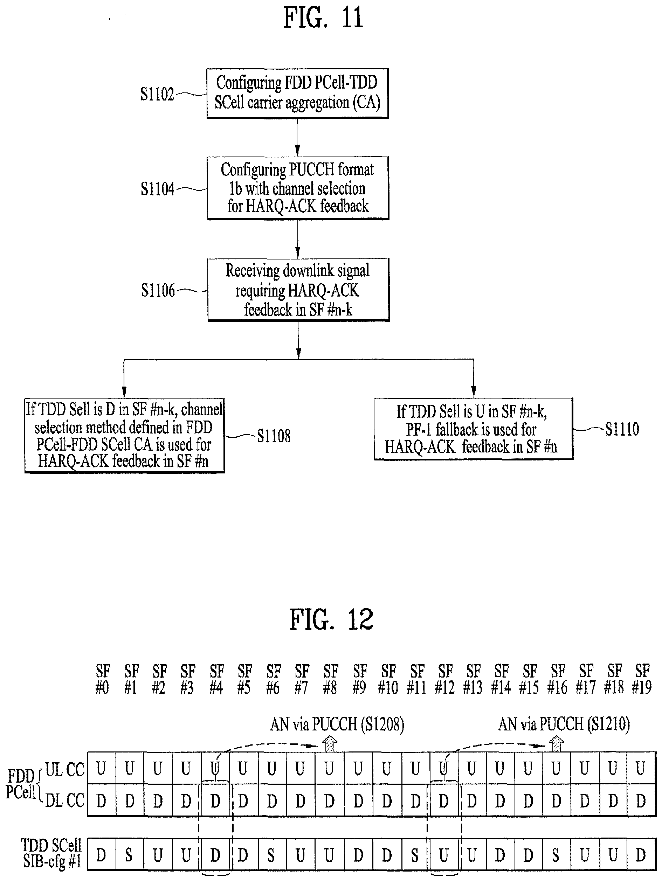

FIGS. 11 and 12 illustrate a HARQ-ACK feedback process in FDD PCell-TDD SCell CA. The figures are illustrated from the viewpoint of a UE and an eNB can perform an operation corresponding to the process.

Referring to FIG. 11, FDD PCell-TDD SCell CA may be configured for a UE (S1102) and PUCCH format 1b with channel selection may be configured for HARQ-ACK feedback (S1104). It is assumed that SIB-cfg of the TDD SCell is UD-cfg#1 for convenience of description (refer to Table 1). Because the PCell is an FDD cell, FDD DL HARQ timing is applied to the TDD SCell as well as the FDD PCell. Accordingly, the UE transmits a HARQ-ACK feedback in SF #n (S1108 to S1110) upon reception of a downlink signal (e.g., a PDSCH or a PDCCH indicating SPS release) in subframe (SF) #n-k (S1106).

Here, when the TDD SCell corresponds to D in SF #n-k, the UE can apply FDD-FDD CA CHsel for HARQ-ACK feedback transmission (S1108 and S1208). Conversely, when the TDD SCell corresponds to U in SF #n-k, the UE can apply PF1-fallback for HARQ-ACK feedback transmission (S1110, S1210). Whether the TDD SCell corresponds to D or U in SF #n-k is determined on the basis of SIB-cfg. S can be handled as D in terms of HARQ-ACK feedback.

Accordingly, a HARQ-ACK feedback information generation method and a PUCCH resource allocation method, a method of allocating PUCCH resources for additional antennas in multi-antenna transmission, a method of generating HARQ-ACK feedback information when HARQ-ACK feedback and a (positive) SR are simultaneously transmitted and the like are varied.

Meanwhile, systems following LTE consider an operating method of resetting/changing UL/DL directions for eIMTA (enhanced interference mitigation and traffic adaptation) in a TDD situation. To this end, a method of (semi-)statically configuring a basic UL-DL configuration (UD-cfg) of a TDD cell (or CC) using higher layer signaling (e.g., SIB) and then dynamically reconfiguring/changing operation UD-cfg of the corresponding cell (or CC) using lower layer (e.g., L1(Layer1) signaling (e.g., PDCCH)) is considered. For convenience of description, basic UD-cfg is referred to as SIB-cfg and operation UD-cfg is referred to as actual-cfg. A subframe configuration depending on UD-cfg is configured on the basis of Table 1.

In this context, D => U (or S) reconfiguration is not easy or may cause deterioration when DL reception/measurement of a (legacy) UE using a CRS in the corresponding D is considered. Conversely, in the case of U (or S) => D reconfiguration, an eNB can provide additional DL resources to an eIMTA UE by not intentionally scheduling/configuring a UL signal that can be transmitted from the legacy UE through the corresponding U.

In view of this, actual-cfg can be optionally determined only from among UD-cfgs (including SIB-cfg) including all Ds in SIB-cfg. That is, UD-cfg in which only D is disposed at D positions in SIB-cfg can be determined as actual-cfg, whereas UD-cfg in which U is disposed at D positions in SIB-cfg cannot be determined as actual-cfg. In eIMTA, reference UD-cfg (referred to hereinafter as D-ref-cfg) for setting HARQ timing (e.g., HARQ-ACK feedback transmission timing) for DL scheduling may be additionally configured through higher layer (signaling). In view of this, actual-cfg can be optionally determined only from among UD-cfgs (including D-ref-cfg) including all Us in D-ref-cfg. Accordingly, UD-cfg in which D is disposed at U positions in D-ref-cfg cannot be determined as actual-cfg.

Therefore, D-ref-cfg can be set to UD-cfg including all Ds in available actual-cfg candidates and SIB-cfg can be set to UD-cfg including all Us in available actual-cfg candidates. That is, D-ref-cfg can be set to D superset UD-cfg with respect to available actual-cfg candidates and SIB-cfg can be set to U superset UD-cfg with respect to available actual-cfg candidates. A reference UD-cfg (referred to hereinafter as U-ref-cfg) of HARQ timing (e.g., UG/PUSCH/PHICH transmission timing) for UL scheduling can be set to SIB-cfg. Accordingly, U in D-ref-cfg can be considered as fixed U and D in SIB-cfg can be considered as fixed D. Therefore, only an SF which corresponds to D in D-ref-cfg and U in SIB-cfg can be considered as a flexible U which can be reconfigured/changed to D. The flexible U can be reconfigured/changed to D according to actual-cfg.

Consequently, after SIB-cfg/D-ref-cfg are configured through higher layer (signaling), one of UD-cfgs including all Ds in SIB-cfg and all Us in D-ref-cfg can be set to actual-cfg according to L1 signaling.

Table 10 shows available actual-cfg candidates (bold box) when [SIB-cfg = UD-cfg#3, D-ref-cfg = UD-cfg#5] is set.

**[Table 10]**

| Uplink-downlink configuration | Sub frame number | | | | | | | | | |
|---|---|---|---|---|---|---|---|---|---|---|
| | 0 | 1 | 2 | 3 | 4 | 5 | 6 | 7 | 8 | 9 |
| 0 | D | S | U | U | U | D | S | U | U | U |
| 1 | D | S | U | U | D | D | S | U | U | D |
| 2 | D | S | U | D | D | D | S | U | D | D |
| 3 (SIB-cfg) | D | S | U | U | U | D | D | D | D | D |
| 4 | D | S | U | U | D | D | D | D | D | D |
| 5 (D-ref-cfg) | D | S | U | D | D | D | D | D | D | D |
| 6 | D | S | U | U | U | D | S | U | U | D |

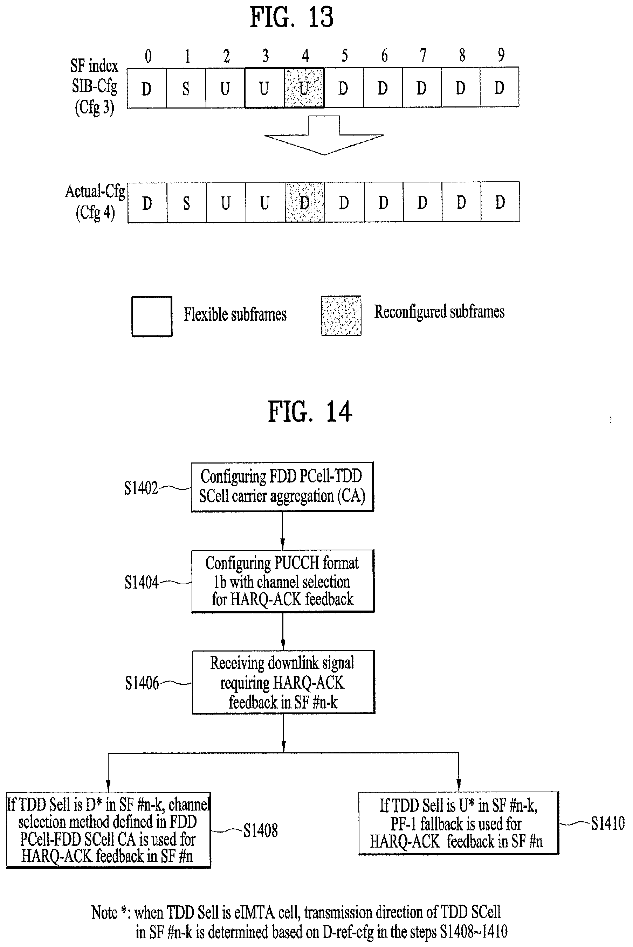

Table 11 shows fixed U (oblique line) and flexible U (hatching) when [SIB-cfg = UD-cfg#3, D-ref-cfg = UD-cfg#5] is set. Only SF #3 and SF #4 can be reconfigured as U => D. FIG. 13 illustrates a case in which SF #4 is reconfigured as D using actual-cfg (UD-cfg#4) under the condition of Table 10.

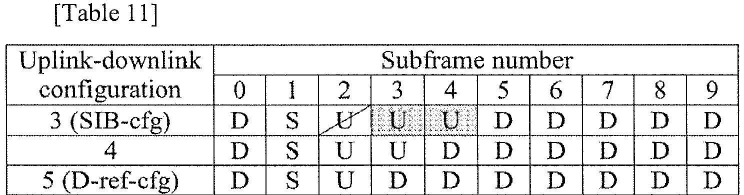

Table 12 shows all available flexible Us (hatching) per SIB-cfg. Actual flexible U is provided as a subset of the hatching parts according to D-ref-cfg.

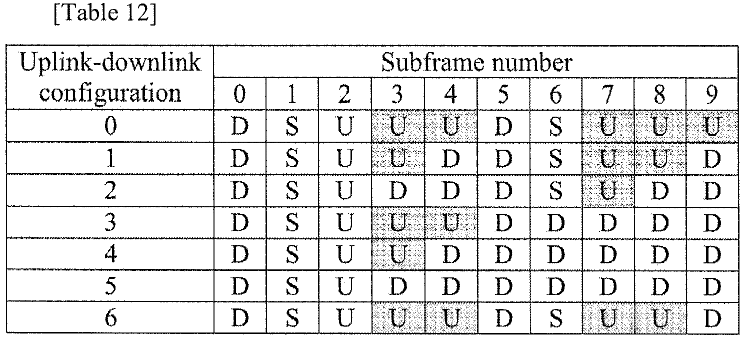

Meanwhile, CHsel can be set for HARQ-ACK feedback in a state in which a TDD SCell is configured to operate on the basis of eIMTA in an FDD PCell-TDD SCell CA situation. In this case, it is possible to consider application of PF1-fallback to SFs in which a TDD SCell is configured to correspond to UL on the basis of SIB-cfg. However, this may be undesirable in terms of configuration/transmission of HARQ-ACK feedback corresponding to CA because a specific UL SF (e.g., flexible U) in SIB-cfg may dynamically change to a DL SF on the basis of actual-cfg reconfiguration due to properties of eIMTA. Accordingly, it is possible to consider application of PF1-fallback to SFs in which the TDD SCell is configured to correspond to U on the basis of actual-cfg in consideration of eIMTA operation. However, when detection of an L1 signal (e.g., PDCCH) indicating actual-cfg fails or content of the corresponding signal is not valid, inconsistency between a UE and an eNB with respect to a UL/DL SF configuration (CHsel or PF1-fallback application per SF according thereto) may cause performance deterioration. For example, the eNB can operate on the basis of actually transmitted actual-cfg and the UE can operate in a state in which SIB-cfg is regarded/assumed as actual-cfg.

Accordingly, when CHsel is set for HARQ-ACK feedback in CA of an FDD PCell and a TDD SCell for which eIMTA operation is set (i.e., FDD PCell-eIMTA TDD SCell CA), PF1-fallback is applied only to SFs in which the TDD SCell is configured to correspond to UL on the basis of D-ref-cfg (CHsel is applied to the remaining SFs). That is, PF1-fallback can be applied only to SFs having fixed U and FDD-FDD CA CHsel can be applied to other SFs. Accordingly, in the case of HARQ-ACK feedback for an SF corresponding to UL on the basis of actual-cfg, PF1-fallback and CHsel can be selectively applied according to whether the SF corresponds to fixed U or flexible U. When PF1-fallback is applied on the basis of D-ref-cfg, CHsel is applied to flexible U that is not reconfigured as D and thus it may be inefficient to secure/ensure DL throughput performance and to allocate PUCCH resources. However, UL/DL configuration inconsistency between a UE and an eNB, which may be generated according to dynamic reconfiguration of actual-cfg, can be overcome, resulting in more efficient PUCCH resource utilization and stabilized DL transmission performance. When CHsel is applied to flexible U that is not reconfigured as D, a HARQ-ACK response to the flexible U can be processed as NACK/DTX. NACK/DTX indicates NACK or DTX.

FIG. 14 illustrates a HARQ-ACK feedback process in FDD PCell-TDD SCell CA according to the present invention. The figure shows the process from the viewpoint of a UE and an eNB can perform an operation corresponding to the process. It is assumed that a TDD SCell is configured to perform eIMTA operation.

Referring to FIG. 14, FDD PCell-TDD SCell CA may be configured for a UE (S1402) and PUCCH format 1b with channel selection maybe set for HARQ-ACK feedback (S1404). In addition, eIMTA operation may be set for the TDD SCell. Accordingly, the UE can receive, from an eNB, CA configuration information (e.g., cell configuration information), HARQ-ACK feedback setting information (e.g., HARQ-ACK feedback scheme and PUCCH resources), eIMTA setting information (e.g., eIMTA ON/OFF, D-ref-cfg indication information, etc.) and the like through higher layer (e.g., RRC) signaling. It is assumed that SIB-cfg of the TDD SCell is UD-cfg#1 for convenience of description (refer to Table 1). Since the PCell is an FDD cell, FDD DL HARQ timing is applied to the TDD SCell as well as the FDD PCell. Accordingly, the UE transmits a HARQ-ACK feedback in subframe (SF) #n (S1408 to S1410) upon reception of a downlink signal that requires HARQ-ACK feedback (e.g., a PDSCH or a PDCCH indicating SPS release) in SF #n-k (S1406).

Here, when the TDD SCell corresponds to D in SF #n-k, the UE can employ FDD-FDD CHsel for HARQ-ACK feedback transmission (S1408). Conversely, when the TDD SCell corresponds to U in SF #n-k, the UE can employ PF1-fallback for HARQ-ACK feedback transmission (S1410). According to the present invention, whether the TDD SCell corresponds to D or U in SF #n-k is determined on the basis of D-ref-cfg. That is, PF1-fallback is applied only to SFs having fixed U in the TDD SCell and CHsel is applied to other SFs. S can be handled as D from in terms of HARQ-ACK feedback.

Accordingly, the method of generating HARQ-ACK feedback information, the method of allocating PUCCH resources, the method of allocating PUCCH resources for additional antennas during multi-antenna transmission, the method of generating HARQ-ACK feedback information when HARQ-ACK feedback and a (positive) SR are simultaneously transmitted, and the like, are varied.

Specifically, when PUCCH TxD transmission is set, additional PUCCH resources for TxD transmission can be implicitly allocated from a DL grant PDCCH transmission resource (e.g., first CCE index n_{CCE})) in the case of SFs in which the TDD SCell is configured to correspond to U on the basis of D-ref-cfg because PF1-fallback is applied to the SFs (e.g., PUCCH resource index linked to n_{CCE}+1). Conversely, additional PUCCH resources for TxD transmission can be explicitly allocated through RRC signaling in the case of the remaining SFs because CHsel is applied to the remaining SFs. In addition, when simultaneous transmission of HARQ-ACK and a (positive) SR is required, a HARQ-ACK state can be mapped to/transmitted on a PUCCH resource (without application of spatial bundling) in the case of SFs in which the TDD SCell is configured to correspond to U on the basis of D-ref-cfg because PF1-fallback is applied to the SFs. In the case of the remaining SFs, a bundled HARQ-ACK state configured through spatial bundling per cell can be mapped to/transmitted on an SR PUCCH resource because CHsel is applied to the remaining SFs.

Distinguished from the aforementioned proposed method, PF1-fallback may be applied to SFs in which the TDD SCell corresponds to U on the basis of SIB-cfg (CHsel is applied to the remaining SFs) when eIMTA operation is not set for the TDD SCell and CHsel may be applied to all SFs when eIMTA operation is set for the TDD SCell, in a situation in which FDD PCell-TDD SCell CA and CHsel are set.

The proposed methods can be similarly applied to not only CA of an FDD cell and an eIMTA based TDD cell but also a case in which eIMTA operation of reconfiguring all or part of UL SFs on UL carriers as DL SFs (and/or special SFs) in a single cell FDD situation.

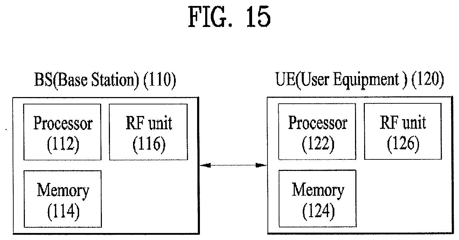

FIG. 15 illustrates a BS and a UE of a wireless communication system, which are applicable to embodiments of the present invention.

Referring to FIG. 15, the wireless communication system includes a BS 110 and a UE 120. When the wireless communication system includes a relay, the BS or UE can be replaced by the relay.

The BS 110 includes a processor 112, a memory 114 and a radio frequency (RF) unit 116. The processor 112 may be configured to implement the procedures and/or methods proposed by the present invention. The memory 114 is connected to the processor 112 and stores information related to operations of the processor 112. The RF unit 116 is connected to the processor 112 and transmits and/or receives an RF signal. The UE 120 includes a processor 122, a memory 124 and an RF unit 126. The processor 122 may be configured to implement the procedures and/or methods proposed by the present invention. The memory 124 is connected to the processor 122 and stores information related to operations of the processor 122. The RF unit 126 is connected to the processor 122 and transmits and/or receives an RF signal.

The embodiments of the present invention described hereinbelow are combinations of elements and features of the present invention. The elements or features may be considered selective unless otherwise mentioned. Each element or feature may be practiced without being combined with other elements or features. Further, an embodiment of the present invention may be constructed by combining parts of the elements and/or features. Operation orders described in embodiments of the present invention may be rearranged. Some constructions of any one embodiment may be included in another embodiment and may be replaced with corresponding constructions of another embodiment. It will be obvious to those skilled in the art that claims that are not explicitly cited in each other in the appended claims may be presented in combination as an embodiment of the present invention or included as a new claim by a subsequent amendment after the application is filed.

In the embodiments of the present invention, a description is made centering on a data transmission and reception relationship among a BS, a relay, and an MS. In some cases, a specific operation described as performed by the BS may be performed by an upper node of the BS. Namely, it is apparent that, in a network comprised of a plurality of network nodes including a BS, various operations performed for communication with an MS may be performed by the BS, or network nodes other than the BS. The term 'BS' may be replaced with the term 'fixed station', 'Node B', 'enhanced Node B (eNode B or eNB)', 'access point', etc. The term 'UE' may be replaced with the term 'Mobile Station (MS)', 'Mobile Subscriber Station (MSS)', 'mobile UE', etc.

The embodiments of the present invention may be achieved by various means, for example, hardware, firmware, software, or a combination thereof. In a hardware configuration, the methods according to the embodiments of the present invention may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the embodiments of the present invention may be implemented in the form of a module, a procedure, a function, etc. For example, software code may be stored in a memory unit and executed by a processor. The memory unit is located at the interior or exterior of the processor and may transmit and receive data to and from the processor via various known means.

Those skilled in the art will appreciate that the present invention may be carried out in other specific ways than those set forth herein without departing from the spirit and essential characteristics of the present invention. The above embodiments are therefore to be construed in all aspects as illustrative and not restrictive. The scope of the invention should be determined by the appended claims and their legal equivalents, not by the above description, and all changes coming within the meaning and equivalency range of the appended claims are intended to be embraced therein.

### [Industrial Applicability]

The embodiments of the present invention mentioned in the foregoing description may be applicable to a user equipment, a base station, or other devices of wireless mobile communication systems.

## Claims

1. A method of transmitting HARQ-ACK (Hybrid Automatic Repeat request Acknowledgement) information by a user equipment (UE) in a wireless communication system, the method comprising:
configuring an FDD (Frequency Division Duplex) PCell (Primary Cell) and a TDD (Time Division Duplex) SCell (Secondary Cell);
configuring a first UL-DL SF (Uplink-Downlink subframe) pattern for the TDD SCell according to pattern indication information received through an L1 (Layer 1) signal; and
transmitting, through an SR (Scheduling Request) PUCCH (Physical Uplink Control Channel), HARQ-ACK information related to an SF in which the transmission direction of the TDD SCell is UL on the basis of the first UL-DL SF pattern,
wherein the HARQ-ACK information includes HARQ-ACK responses for both the PCell and the SCell when the transmission direction of the TDD SCell is DL in the SF on the basis of a reference UL-DL SF pattern configured for the TDD SCell in relation to a HARQ-ACK feedback, and the HARQ-ACK information includes an HARQ-ACLK response for only the PCell when the transmission direction of the TDD SCell is UL in the SF on the basis of the reference UL-DL SF pattern.

2. The method according to claim 1, wherein the HARQ-ACK responses for the PCell and the SCell include HARQ-ACK responses bundled per cell when the HARQ-ACK information includes the HARQ-ACK responses for both the PCell and the SCell.

3. The method according to claim 1, wherein the HARQ-ACK information includes an individual HARQ-ACK response generated per transport block of the PCell for one or more transport blocks of the PCell when the HARQ-ACK information includes the HARQ-ACK response for only the PCell.

4. The method according to claim 1, wherein, when the transmission direction of the TDD SCell is DL in the SF on the basis of the reference UL-DL SF pattern configured for the TDD SCell, the SF indicates an SF in which the transmission direction is reconfigurable from UL to DL.

5. The method according to claim 1, wherein, when the transmission direction of the TDD SCell is UL in the SF on the basis of the reference UL-DL SF pattern configured for the TDD SCell, the SF indicates an SF in which the transmission direction is not reconfigurable from UL to DL.

6. The method according to claim 1, wherein the SR PUCCH includes PUCCH format 1a or PUCCH format lb.

7. A UE configured to transmit HARQ-ACK information in a wireless communication system, the UE comprising:
a radio frequency (RF) module; and
a processor,
wherein the processor is configured:
to configure an FDD PCell and a TDD SCell;
to configure a first UL-DL SF pattern for the TDD SCell according to pattern indication information received through an L1 signal; and
to transmit, through an SR PUCCH, HARQ-ACK information related to an SF in which the transmission direction of the TDD SCell is UL on the basis of the first UL-DL SF pattern,
wherein the HARQ-ACK information includes HARQ-ACK responses for both the PCell and the SCell when the transmission direction of the TDD SCell is DL in the SF on the basis of a reference UL-DL SF pattern configured for the TDD SCell in relation to a HARQ-ACK feedback, and the HARQ-ACK information includes an HARQ-ACLK response for only the PCell when the transmission direction of the TDD SCell is UL in the SF on the basis of the reference UL-DL SF pattern.

8. The UE according to claim 7, wherein the HARQ-ACK responses for the PCell and the SCell include HARQ-ACK responses bundled per cell when the HARQ-ACK information includes the HARQ-ACK responses for both the PCell and the SCell.

9. The UE according to claim 7, wherein the HARQ-ACK information includes an individual HARQ-ACK response generated per transport block of the PCell for one or more transport blocks of the PCell when the HARQ-ACK information includes the HARQ-ACK response for only the PCell.

10. The UE according to claim 7, wherein, when the transmission direction of the TDD SCell is DL in the SF on the basis of the reference UL-DL SF pattern configured for the TDD SCell, the SF indicates an SF in which the transmission direction is reconfigurable from UL to DL.

11. The UE according to claim 7, wherein, when the transmission direction of the TDD SCell is UL in the SF on the basis of the reference UL-DL SF pattern configured for the TDD SCell, the SF indicates an SF in which the transmission direction is not reconfigurable from UL to DL.

12. The UE according to claim 7, wherein the SR PUCCH includes PUCCH format 1a or PUCCH format lb.
